# FASCICULE DE BREVET EUROPEEN

(11) **EP 3 390 797 B1**
(45) Date de publication et mention de la délivrance du brevet: **11.09.2019**
(21) Numéro de dépôt: 16819617.8
(22) Date de dépôt: 08.12.2016
(51) Int. Cl.: F02D 41/00, F02B 37/16

(54) **PROCÉDÉ DE PILOTAGE D'UN MOTEUR À COMBUSTION INTERNE SURALIMENTÉ ET MOTEUR SURALIMENTÉ ASSOCIÉ**
VERFAHREN ZUR STEUERUNG EINES AUFGELADENEN VERBRENNUNGSMOTORS UND ZUGEHÖRIGER AUFGELADENER MOTOR
METHOD FOR CONTROLLING A SUPERCHARGED INTERNAL COMBUSTION ENGINE AND ASSOCIATED SUPERCHARGED ENGINE

(30) Priorité: 17.12.2015 FR 1562616
(43) Date de publication de la demande: 24.10.2018
(73) Titulaire: Renault S.A.S., 92100 Boulogne-Billancourt (FR)
(72) Inventeur: LHERAUD, Nicolas, 92120 Montrouge (FR)
(86) Numéro de dépôt international: PCT/FR2016/053264
(87) Numéro de publication internationale: WO 2017/103384

(56) Documents cités:
- FR-A3- 2 924 469
- FR-A3- 2 986 274
- US-A1- 2009 178 655
- US-A1- 2014 047 833

## Description

### DOMAINE TECHNIQUE DE L'INVENTION

L'invention concerne un procédé de pilotage d'un moteur à combustion interne suralimenté, et un moteur suralimenté apte à la mise en oeuvre d'un tel procédé. Il permet de réduire fortement le bruit de décharge d'un compresseur de moteur suralimenté et le pompage dans le compresseur, lors de la fermeture d'une vanne d'admission d'air dans un tel moteur. Elle trouve une application avantageuse sur les moteurs à essence de véhicules automobiles.

### ETAT DE LA TECHNIQUE

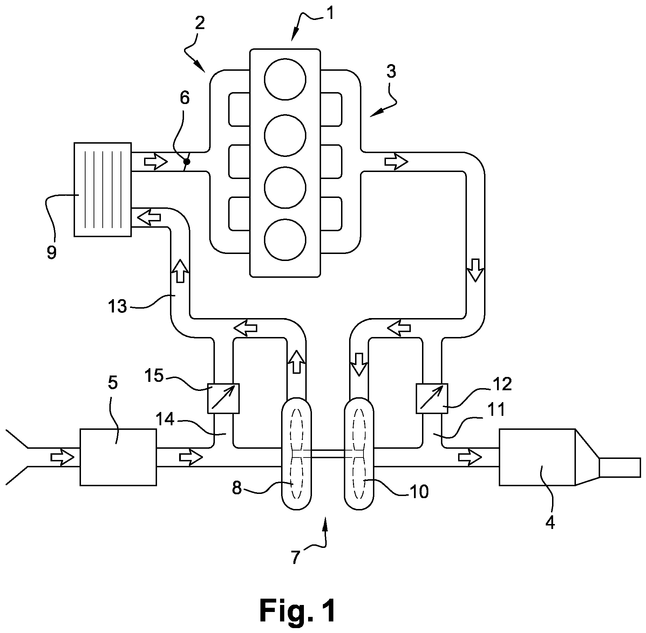

De nombreux moteurs modernes à combustion interne sont équipés d'un turbocompresseur, comme le représente la figure 1. Pour son fonctionnement, un tel moteur 1, qui comporte ici quatre cylindres, aspire de l'air par l'intermédiaire d'une conduite d'admission 2 et rejette ses gaz d'échappement par une conduite d'échappement 3 afin de les diriger vers un système d'échappement 4 comportant par exemple un catalyseur et un silencieux.

Dans la conduite d'admission 2, un filtre à air 5 permet d'éliminer les poussières contenues dans l'air, et une vanne d'admission d'air 6, constituée par exemple d'un volet pivotant, permet de réguler le débit d'air admis dans le moteur 1 en obstruant plus ou moins la conduite d'admission 2.

De manière connue, quand le moteur 1 est un moteur à essence, la vanne d'admission 6 est un boîtier-papillon 6. La position de ce boîtier-papillon 6, et donc le débit d'air admis dans le moteur 1, est déterminée par un calculateur du moteur (non représenté) en fonction de la volonté d'un conducteur du véhicule, exprimée par une action dudit conducteur sur un organe de commande, par exemple par l'enfoncement d'une pédale d'accélérateur (non représentée). L'enfoncement de la pédale est transformé par le calculateur en une consigne de couple, qui est elle-même traduite en un débit d'air et en un débit de carburant qui est le plus souvent injecté dans le moteur dans des proportions stoechiométriques par un dispositif d'injection de carburant (non représenté) qui peut être de type direct ou indirect.

S'agissant d'un moteur suralimenté, le moteur 1 comporte ici par ailleurs un turbocompresseur 7 dont le compresseur 8 est interposé dans la conduite d'admission 2 entre le filtre à air 5 et le boîtier-papillon 6. De plus, il est possible qu'un échangeur de température 9 soit disposé dans la conduite d'admission 2, par exemple entre le compresseur 8 et le boîtier-papillon 6, de manière à refroidir l'air comprimé par le compresseur 8.

Le compresseur 8 est entraîné par la turbine 10 du turbocompresseur 7, qui est interposée dans la conduite d'échappement 3, entre le moteur 1 et le système d'échappement 4. De manière connue en soi, la conduite d'échappement 3 peut être pourvue d'une conduite de dérivation 11 qui contourne la turbine 10 et qui est pourvue d'une vanne de décharge à l'échappement 12 (également appelée vanne « wastegate » selon sa dénomination anglaise), pour pouvoir limiter l'énergie apportée par les gaz d'échappement à la turbine 10 et donc pour pouvoir limiter la pression fournie par le compresseur 8.

En variante non représentée, le turbocompresseur peut comporter une turbine à géométrie variable, c'est-à-dire pourvue d'ailettes d'inclinaison variable permettant également de moduler l'énergie prélevée sur les gaz d'échappement.

De manière classique, lorsque le moteur 1 est sollicité à pleine charge, la vanne de décharge à l'échappement 12 est fermée par le calculateur, de sorte que l'intégralité des gaz d'échappement transite par la turbine 10, afin que le turbocompresseur 7 fournisse une pression de suralimentation des gaz d'admission particulièrement importante. Alors, le turbocompresseur 7 est susceptible de voir son compresseur 8 et sa turbine 10 atteindre des vitesses de rotation très élevées, de l'ordre de 150.000 à 200.000 tours par minute. Ainsi, un turbocompresseur 7 entraîné à une telle vitesse possède une inertie élevée.

Or, lorsque le conducteur du véhicule effectue ce qu'on appelle un lever de pied, c'est-à-dire lorsque le conducteur relève brutalement le pied de la pédale d'accélérateur, celle-ci rejoignant alors sous l'effet de moyens de rappel élastiques une position de repos pour laquelle le moteur 1 est commandé de manière à fournir un couple minimum, souvent un couple juste nécessaire au maintien de son régime de ralenti,

Dans le cas où un tel lever de pied provoque une fermeture ou une quasi-fermeture du boîtier-papillon 6, le moteur ne reçoit plus qu'un débit minimal d'air, et il ne circule plus qu'un débit minimal de gaz d'échappement dans la conduite d'échappement 3, de sorte que la turbine 10 ne fournit plus d'énergie motrice au compresseur 7. Cependant, l'inertie du rotor du turbocompresseur 7 est telle que celui-ci conserve pendant quelques secondes une vitesse suffisante pour continuer à comprimer l'air d'admission.

Or, le compresseur 7 est alors amené à fournir de l'air sous pression dans le tronçon 13 de la conduite d'admission 2 compris entre le compresseur 8 et boîtier-papillon 6. Dans ce tronçon 13, il ne peut circuler qu'un faible débit d'air lorsque le boîtier-papillon 6 est fermé. Dans ces conditions de fonctionnement (i.e. : pression élevée et débit faible), le compresseur 8 peut être amené à un régime d'instabilité, connu sous le terme de « pompage », susceptible de faire apparaître des vibrations importantes qui peuvent endommager les paliers sur lesquels le rotor du turbocompresseur 7 est monté tournant, et finalement détruire le turbocompresseur.

On connaît de nombreux procédés qui visent à éliminer le pompage d'un turbocompresseur. Ainsi, il est connu de l'art antérieur de disposer dans la conduite d'admission 2 une conduite de dérivation 14 qui contourne le compresseur 8. Une telle conduite de dérivation 14 est pourvue d'une vanne de décharge à l'admission 15 (également appelée vanne « pop-off » selon sa dénomination anglaise), par exemple une vanne électrique qui, lorsqu'une telle situation de pression élevée en aval du compresseur est détectée, est ouverte de manière à permettre à l'air en surpression contenu dans le tronçon 13 de la conduite d'admission 2 d'être réintroduit en amont du compresseur 8. Le débit traversant le compresseur 8 augmente, ce qui a pour effet d'éloigner le compresseur 8 des conditions d'apparition d'instabilités de fonctionnement.

Par exemple, la publication FR-A1-2986274 prévoit d'utiliser une vanne de décharge électrique sur une conduite de dérivation d'un compresseur de moteur suralimenté, et de commander l'ouverture de cette vanne quand une valeur de la pression de suralimentation du moteur s'écarte d'une valeur de consigne prédéterminée.

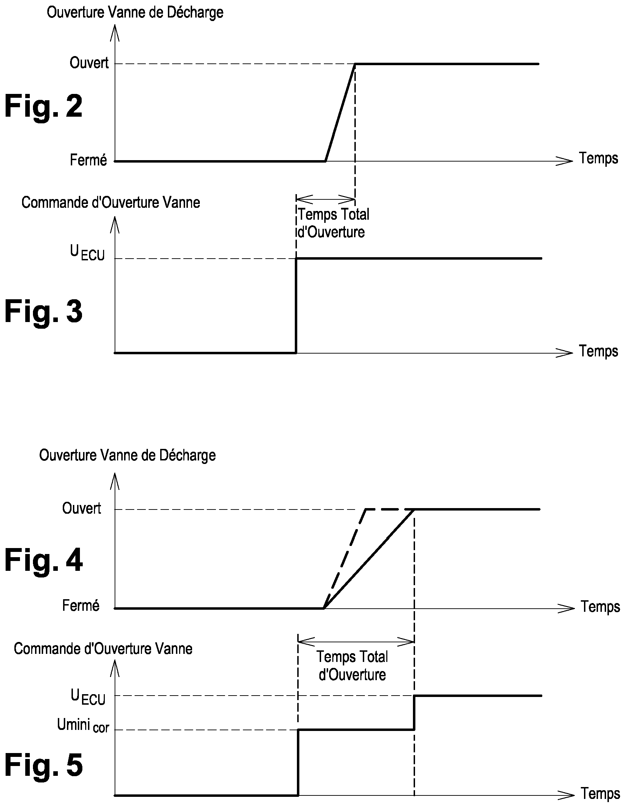

Une conduite de dérivation d'un compresseur et l'ouverture rapide d'une vanne de décharge sur un critère de pression permettent souvent de contrer efficacement le pompage du compresseur. Néanmoins, on a généralement recours à une vanne binaire (dite aussi vanne « on-off »), c'est-à-dire à une vanne à deux positions, qui présente seulement une position stable de pleine fermeture et une position stable de pleine ouverture, le passage de la position de pleine fermeture à la position de pleine ouverture étant provoqué par l'application d'une tension par un calculateur du moteur, comme le montrent les figures 2 et 3 sur lesquelles on a illustré les procédés d'ouverture de la vanne selon l'état de la technique connu.

Sur la figure 3, on a représenté en abscisse le temps et en ordonnée la tension appliquée par le calculateur aux bornes de la vanne. De manière connue en soi, un calculateur est relié aux différents capteurs et actionneurs du moteur et il peut délivrer aux bornes de ces composants une tension continue qui est soit nulle, soit égale à une valeur fixe U_{ECU} prédéterminée lors de la conception du calculateur, par exemple 12 volts ou 24 volts dans les calculateurs classiques. Dans la suite on désignera cette tension par l'expression « tension constante continue du calculateur » ou « tension du calculateur ».

A un instant donné, correspondant par exemple à un événement représentatif de la fermeture du boîtier-papillon, par exemple le dépassement d'un seuil de pression de suralimentation, le calculateur fait basculer la tension aux bornes de la vanne de décharge 15 de zéro volts à la tension du calculateur U_{ECU}.

En référence à la figure 2, qui représente en abscisse le temps et en ordonnée le degré d'ouverture de la vanne de décharge, par exemple la levée d'un pointeau de la vanne sur un siège, on voit que l'augmentation brutale de la tension aux bornes de la vanne a pour effet de faire passer la vanne de sa position de pleine fermeture à sa position de pleine ouverture, après un délai de retard à l'ouverture qui correspond au temps écoulé entre le moment où la tension du calculateur U_{ECU} commence à être appliquée et le moment où la vanne commence à s'ouvrir.

Le temps total d'ouverture (visible sur la figure 2), et plus particulièrement la durée de l'ouverture de la vanne proprement dite (c'est-à-dire : sans compter le délai de retard à l'ouverture) n'est pas contrôlé. La très grande rapidité d'ouverture de la vanne permet de faire chuter rapidement et efficacement la pression de l'air en aval du compresseur et d'éliminer ainsi le risque de pompage, mais l'air qui s'engouffre brutalement dans la conduite de décharge 14 crée un bruit perceptible depuis l'habitacle du véhicule et/ou depuis l'extérieur du véhicule, connu sous le nom de bruit de décharge.

### RESUME DE L'INVENTION

L'invention propose de remédier aux défauts des procédés de pilotage connus. Elle vise à supprimer ou au moins à réduire au maximum le bruit de décharge dans une conduite de décharge à l'admission d'un compresseur de moteur suralimenté de véhicule automobile à la suite d'un lever de pied du conducteur du véhicule, tout en éliminant le risque de pompage du compresseur.

Elle propose pour cela un procédé de pilotage d'un moteur à combustion interne suralimenté de véhicule automobile, ledit moteur comprenant : un compresseur interposé dans une conduite d'admission pour comprimer des gaz d'admission destiné à être fournis au moteur ; une conduite de dérivation du compresseur pourvue d'une vanne binaire de décharge dudit compresseur dont l'ouverture est commandée par l'application à ses bornes d'une tension électrique par un calculateur du moteur ; et, un boîtier-papillon interposé dans la conduite d'admission, en aval du compresseur, pour réguler le débit des gaz d'admission, ledit procédé comportant :
- Un lever de pied du conducteur du véhicule, commandant un retour rapide du boîtier-papillon vers une position de fermeture ;
- Une fermeture du boîtier-papillon ; et
- Une commande de l'ouverture de la vanne de décharge à partir d'un événement représentatif de de la fermeture du boîtier-papillon.

La principale caractéristique du procédé selon l'invention est que, pour ouvrir la vanne binaire de décharge, le calculateur applique à ses bornes une valeur de tension minimale pendant au moins la première partie de la course d'ouverture de ladite vanne, apte à autoriser son ouverture et à lui conférer une vitesse d'ouverture minimale sur au moins ladite première partie de la course.

### BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :
- la figure 1 est une vue schématique illustrant un moteur suralimenté, équipé d'une vanne binaire de décharge à l'admission d'un compresseur du moteur, pour la mise en oeuvre du procédé selon l'invention ;
- la figure 2 est un diagramme illustrant l'ouverture de la vanne de la figure 1, selon l'état de la technique ;
- la figure 3 est un diagramme illustrant les variations de tension aux bornes de la vanne, selon l'état de la technique, correspondant à l'ouverture de la vanne selon la figure 2 ;
- la figure 4 est un diagramme illustrant l'ouverture de la vanne dans un mode de réalisation de l'invention ;
- la figure 5 est un diagramme illustrant les variations de tension aux bornes de la vanne, correspondant à l'ouverture de la vanne selon la figure 4 ;
- la figure 6 est un diagramme illustrant l'ouverture de la vanne dans un autre mode de réalisation de l'invention ; et,
- la figure 7 est un diagramme illustrant les variations de tension aux bornes de la vanne, correspondant à l'ouverture de la vanne selon la figure 6.

### DESCRIPTION DETAILLEE DES FIGURES

Les figures 1 à 3 illustrent l'état de la technique et ont déjà été décrites plus haut en détail. Un dispositif de motorisation selon l'invention comprend tous les éléments d'un dispositif de motorisation selon l'état de la technique conforme à la figure 1. En outre, le calculateur du moteur comprend des moyens de modulation de largeur d'impulsions de la tension constante continue du calculateur U_{ECU}, également connus sous l'abréviation PWM (de l'acronyme anglais pour : Pulse Width Modulation).

De manière connue en soi, ces moyens permettent d'appliquer aux bornes de la vanne de décharge électrique 15 une succession de créneaux alternés de tension nulle et de tension égale à la tension du calculateur U_{ECU} , pendant des durées prédéterminées très courtes, par exemple de l'ordre de quelques millisecondes, pour obtenir aux bornes de la vanne, sur une durée moyenne plus longue correspondant par exemple à une durée d'ouverture de la vanne, une tension qui est en moyenne équivalente à une tension intermédiaire U_{cor} dont la valeur est comprise entre zéro volts et la tension du calculateur U_{ECU}. Bien entendu, la valeur de la tension intermédiaire est déterminée par le rapport entre les durées d'application des créneaux de tension nulle et de tension du calculateur U_{ECU} .

La dynamique de l'ouverture de la vanne 15 étant nettement moins rapide que les variations de tension à ses bornes, la vanne 15 se comporte comme si la tension intermédiaire U_{cor} était appliquée de manière constante à ses bornes. Le résultat est que la vanne s'ouvre progressivement, en passant de manière continue de sa position de pleine fermeture à sa position de pleine ouverture, mais avec une vitesse plus faible que si la tension du calculateur U_{ECU} lui était appliquée, ladite vitesse étant une fonction croissante de la valeur de la tension intermédiaire U_{cor}. On peut donc régler la vitesse en choisissant une valeur de tension intermédiaire U_{cor}. adaptée, cette valeur pouvant être déterminée par des essais préalables.

D'autre part, il existe une valeur minimale de tension intermédiaire Umini_{cor} en dessous de laquelle la vanne ne s'ouvre pas. Cette valeur peut être aussi déterminée expérimentalement. En choisissant pour valeur de tension intermédiaire cette valeur minimale, on assure que la vanne de décharge s'ouvre, et qu'elle s'ouvre avec une vitesse minimale, comme l'indiquent les figures 4 et 5. Cela permet de réduire le plus possible, voire d'éliminer, le bruit de pompage, qui est dû à un début d'ouverture de la vanne de décharge 15 trop rapide.

Sur la figure 5, on a représenté en abscisse le temps et en ordonnée la tension appliquée par le calculateur aux bornes de la vanne. A un instant représentatif de la fermeture du boîtier-papillon consécutive à un lever de pied du conducteur, par exemple le dépassement d'un seuil de pression de suralimentation (pression de l'air comprimé par le compresseur, mesurée en aval du compresseur), le calculateur bascule la tension appliquée aux bornes de la vanne d'une tension nulle à la tension minimale Umini_{cor}, par modulation de largeur d'impulsion de sa tension de calculateur U_{ECU}.

La figure 4 représente en abscisse le temps et en ordonnée l'ouverture de la vanne correspondant à l'application de la tension selon la figure 5. Par rapport à l'évolution de l'ouverture de la vanne selon la figure 2, qui est rappelée en pointillés, on constate que le délai de retard à l'ouverture de la vanne est identique, mais que la durée d'ouverture proprement dite est augmentée, parce-que la vitesse d'ouverture est diminuée, plus particulièrement au début de l'ouverture. Cela permet de réduire le plus possible, voire d'éliminer, le bruit de décharge.

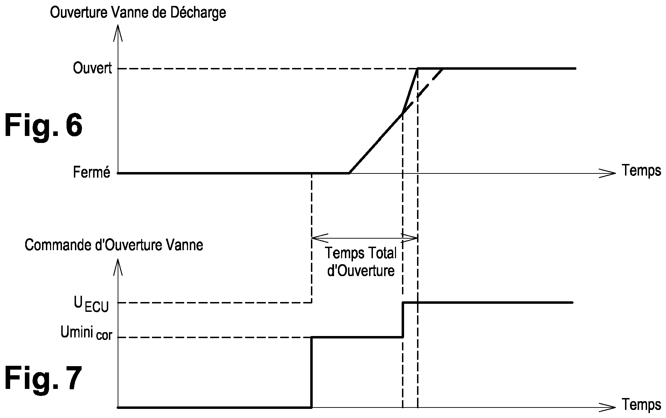

Dans un mode perfectionné de l'invention, illustré par les figures 6 et 7, on s'assure que l'augmentation de la durée d'ouverture de la vanne ne conduit pas à faire baisser trop lentement la pression de l'air comprimé par le compresseur, en d'autres termes, qu'elle garantit bien d'éviter le pompage.

Pour cela (voir figure 7), à un instant représentatif de la fermeture du boîtier-papillon, le calculateur bascule d'abord la tension appliquée aux bornes de la vanne de la tension nulle jusqu'à la tension minimale Umini_{cor}, par modulation de largeur d'impulsion de sa tension de calculateur U_{ECU}., pendant une première partie de la course d'ouverture de la vanne, c'est-à-dire entre la position de pleine fermeture de la vanne et une position d'ouverture partielle. La durée d'application de la tension minimale peut être ajustée par des essais préalables de manière à correspondre à une ouverture partielle déterminée. Ensuite, dans la dernière partie de l'ouverture de la vanne, c'est-à-dire entre la position d'ouverture partielle précédente de la vanne et sa position de pleine ouverture, il applique la tension du calculateur U_{ECU}, ce qui a pour effet d'augmenter la vitesse d'ouverture de la vanne pendant la fin de sa course.

La figure 6 illustre le changement de vitesse d'ouverture de la vanne dû au changement de tension appliquée. On a rappelé en pointillé la courbe d'ouverture en trait plein de la figure 4. Il résulte du changement de tension une diminution du temps d'ouverture total de la vanne, plus particulièrement du temps d'ouverture proprement dit, par rapport au premier mode de réalisation de la figure 4.

Un tel procédé permet de réaliser un compromis plus avantageux entre la réduction du bruit de décharge, phénomène lié à une vitesse d'ouverture trop rapide de la vanne de décharge, et l'élimination du pompage, phénomène lié à un temps d'ouverture trop lent.

## Revendications

1. Procédé de pilotage d'un moteur (1) à combustion interne suralimenté de véhicule automobile, ledit moteur comportant : un compresseur (8) interposé dans une conduite d'admission (2) pour comprimer des gaz d'admission destinés à être fournis au moteur (1); une conduite de dérivation (14) du compresseur (8) pourvue d'une vanne binaire (15) de décharge dudit compresseur (8) dont l'ouverture est commandée par l'application à ses bornes d'une tension électrique par un calculateur du moteur ; et, un boîtier-papillon (6) interposé dans la conduite d'admission (2), en aval du compresseur (8), pour réguler le débit des gaz d'admission, ledit procédé comportant :
- Un lever de pied du conducteur du véhicule, commandant un retour rapide du boîtier-papillon (6) vers une position de fermeture ;
- Une fermeture du boîtier-papillon (6),
- Une commande de l'ouverture de la vanne de décharge (15) à partir d'un événement représentatif de la fermeture du boîtier-papillon,
**CARACTERISE EN CE QUE**
pour ouvrir la vanne (15), le calculateur applique à ses bornes une valeur de tension minimale (Umin_{corr}) pendant au moins une première partie de la course d'ouverture de ladite vanne binaire, apte à autoriser son ouverture et à lui conférer une vitesse d'ouverture minimale sur au moins ladite première partie de la course.

2. Procédé selon la revendication 1, **caractérisé en ce que** l'événement représentatif de la fermeture du boîtier-papillon (6) est le dépassement d'un seuil de pression de suralimentation du moteur.

3. Procédé selon l'une des revendications précédentes, **caractérisé en ce que** la tension minimale (Umin_{corr}) est obtenue par modulation de largeur d'impulsions de la tension constante continue (U_{ECU}) du calculateur.

4. Procédé selon la revendication 3, **caractérisé en ce que** le calculateur applique en outre aux bornes de la vanne (15), sur une dernière partie de l'ouverture de celle-ci, une tension égale à la tension constante continue (U_{ECU}) du calculateur, apte à augmenter sa vitesse d'ouverture sur la dernière partie de son ouverture.

5. Moteur (1) à combustion interne suralimenté de véhicule automobile pour la mise en oeuvre du procédé selon l'une quelconque des revendications 1 à 4, ledit moteur comportant : un compresseur (8) interposé dans une conduite d'admission (2) pour comprimer des gaz d'admission destinés à être fournis au moteur (1) ; une conduite de dérivation (14) du compresseur (8) pourvue d'une vanne (15) de décharge dudit compresseur (8) dont l'ouverture est commandée par l'application à ses bornes d'une tension électrique par un calculateur du moteur ; et, un boîtier-papillon (6) interposé dans la conduite d'admission (2), en aval du compresseur (8), pour réguler le débit des gaz d'admission
**CARACTERISE EN CE QUE**
le calculateur du moteur comprend en outre des moyens de modulation de largeur d'impulsions de sa tension constante continue (U_{ECU}), aptes à pouvoir appliquer aux bornes de la vanne (15) une tension minimale (Umin_{corr}) plus faible que la tension constante continue (U_{ECU}).

## Patentansprüche

1. Verfahren zur Steuerung eines aufgeladenen Verbrennungsmotors (1) eines Kraftfahrzeugs, wobei der Motor aufweist: einen Verdichter (8), der in eine Einlassleitung (2) eingebaut ist, zum Verdichten von Einlassgasen, die dazu bestimmt sind, dem Motor (1) zugeführt zu werden; eine Bypassleitung (14) des Verdichters (8), die mit einem Auf/Zu-Ventil (15) zum Entladen des Verdichters (8) versehen ist, dessen Öffnen durch das Anlegen einer elektrischen Spannung an seine Klemmen durch einen Computer des Motors gesteuert wird; und ein Drosselklappengehäuse (6), das stromabwärts des Verdichters (8) in die Einlassleitung (2) eingebaut ist, zum Regeln der Durchflussmenge der Einlassgase, wobei das Verfahren umfasst:
- ein Heben des Fußes des Fahrers des Fahrzeugs, welches eine schnelle Rückkehr des Drosselklappengehäuses (6) in eine Schließposition steuert;
- ein Schließen des Drosselklappengehäuses (6);
- eine Steuerung des Öffnens des Entladeventils (15) anhand eines Ereignisses, das für das Schließen des Drosselklappengehäuses repräsentativ ist,
**dadurch gekennzeichnet, dass**
zum Öffnen des Ventils (15) der Computer an dessen Klemmen einen minimalen Spannungswert (Umin_{corr}) während wenigstens eines ersten Teils des Öffnungsweges des Auf/Zu-Ventils anlegt, der geeignet ist, sein Öffnen zu erlauben und ihm eine minimale Öffnungsgeschwindigkeit auf wenigstens dem ersten Teil des Weges zu verleihen.

2. Verfahren nach Anspruch 1, **dadurch gekennzeichnet, dass** das Ereignis, das für das Schließen des Drosselklappengehäuses (6) repräsentativ ist, das Überschreiten eines Schwellenwertes des Ladedrucks des Motors ist.

3. Verfahren nach einem der vorhergehenden Ansprüche, **dadurch gekennzeichnet, dass** die minimale Spannung (Umin_{corr}) durch Pulsweitenmodulation der konstanten Gleichspannung (U_{ECU}) des Computers gewonnen wird.

4. Verfahren nach Anspruch 3, **dadurch gekennzeichnet, dass** der Computer außerdem an die Klemmen des Ventils (15) auf einem letzten Teil des Öffnungsvorgangs desselben eine Spannung anlegt, die gleich der konstanten Gleichspannung (U_{ECU}) des Computers ist und geeignet ist, seine Öffnungsgeschwindigkeit auf dem letzten Teil seines Öffnungsvorgangs zu erhöhen.

5. Aufgeladener Verbrennungsmotor (1) eines Kraftfahrzeugs für die Durchführung des Verfahrens nach einem der Ansprüche 1 bis 4, wobei der Motor aufweist: einen Verdichter (8), der in eine Einlassleitung (2) eingebaut ist, zum Verdichten von Einlassgasen, die dazu bestimmt sind, dem Motor (1) zugeführt zu werden; eine Bypassleitung (14) des Verdichters (8), die mit einem Ventil (15) zum Entladen des Verdichters (8) versehen ist, dessen Öffnen durch das Anlegen einer elektrischen Spannung an seine Klemmen durch einen Computer des Motors gesteuert wird; und ein Drosselklappengehäuse (6), das stromabwärts des Verdichters (8) in die Einlassleitung (2) eingebaut ist, zum Regeln der Durchflussmenge der Einlassgase,
**dadurch gekennzeichnet, dass**
der Computer des Motors außerdem Mittel zur Pulsweitenmodulation seiner konstanten Gleichspannung (U_{ECU}) umfasst, die dafür ausgelegt sind, an die Klemmen des Ventils (15) eine minimale Spannung (Umin_{corr}) anlegen zu können, die niedriger als die konstante Gleichspannung (U_{ECU}) ist.

## Claims

1. Method for controlling a supercharged internal combustion engine (1) of a motor vehicle, the said engine comprising: a compressor (8) which is interposed in an inlet pipe (2) in order to compress the intake gases which are intended to be supplied to the engine (1); a branch pipe (14) of the compressor (8) provided with a binary discharge valve (15) of the said compressor (8) whose opening is controlled by the application to the terminals thereof of an electrical voltage by a processor of the engine; and a throttle valve body (6) which is interposed in the inlet pipe (2) downstream of the compressor (8) in order to control the flow rate of the inlet gases, the said method comprising:
- a lifting of the foot of the driver of the vehicle, controlling a rapid return of the throttle valve body (6) to a closure position;
- a closure of the throttle valve body (6);
- a control of the opening of the discharge valve (15) from an event which is representative of the closure of the throttle valve body,
**characterized in that**,
in order to open the valve (15), the processor applies a minimum voltage value (Umin_{cor}) to the terminals thereof for at least one first portion of the opening travel of the binary valve which is capable of authorizing the opening thereof and providing it with a minimum opening speed over at least the said first portion of the travel.

2. Method according to Claim 1, **characterized in that** the event representative of the closure of the throttle valve body (6) is a supercharging pressure threshold of the engine being exceeded.

3. Method according to either of the preceding claims, **characterized in that** the minimum voltage (Umin_{cor}) is obtained by means of modulation of the pulse width of the continuous constant voltage (U_{ECU}) of the processor.

4. Method according to Claim 3, **characterized in that** the processor further applies to the terminals of the valve (15), over a final portion of the opening thereof, a voltage which is equal to the continuous constant voltage (U_{ECU}) of the processor, which is capable of increasing the opening speed thereof over the final portion of the opening thereof.

5. Supercharged internal combustion engine (1) for a motor vehicle for implementing the method according to any one of Claims 1 to 4,
the said engine comprising: a compressor (8) which is interposed in an inlet pipe (2) in order to compress the inlet gases which are intended to be supplied to the engine (1); a branch pipe (14) of the said compressor (8) provided with a discharge valve (15) of the compressor (8) whose opening is controlled by the application to the terminals thereof of an electrical voltage by a processor of the engine; and a throttle valve body (6) which is interposed in the inlet pipe (2) downstream of the compressor (8) in order to control the flow rate of the inlet gases,
**characterized in that**
the processor of the engine further comprises means for modulating the pulse width of the continuous constant voltage (U_{ECU}) thereof, which are capable of being able to apply to the terminals of the valve (15) a minimum voltage (Umin_{cor}) lower than the continuous constant voltage (U_{ECU}) .
